# EUROPEAN PATENT APPLICATION

(11) **EP 4 772 545 A1**
(43) Date of publication of application: **08.07.2026**
(21) Application number: 24860028.0
(22) Date of filing: 25.03.2024
(51) Int. Cl.: C08F 10/00, C08F 4/16, C08F 4/643

(54) **ZIEGLER-NATTA CATALYST FOR OLEFIN POLYMERIZATION, METHOD FOR PREPARING POLYOLEFIN, AND POLYOLEFIN RESIN**

(30) Priority: 29.08.2023 KR 20230113899
(71) Applicant: Hanwha Solutions Corporation, Seoul 04541 (KR)
(72) Inventor: WOO, Hyun Je, Seoul 04541 (KR); JOUNG, Ui Gab, Seoul 04541 (KR); KWON, Yea Rang, Seoul 04541 (KR)
(74) Representative: Berggren Oy
(86) International application number: PCT/KR2024/003686
(87) International publication number: WO 2025/048096

(57) **Abstract**

Provided are a Ziegler-Natta catalyst for olefin polymerization, a method for preparing polyolefin, and a polyolefin resin. The Ziegler-Natta catalyst comprises: (i) a Ziegler-Natta pro-catalyst for olefin polymerization comprising a titanium compound represented by Formula 1, a magnesium compound represented by Formula 2, and an internal electron donor; (ii) an organoaluminum compound represented by Formula 7; and (iii) an external electron donor represented by Formula 3, wherein the internal electron donor includes a mixture of a first internal electron donor represented by Formula 4, a second internal electron donor represented by Formula 5, and a third internal electron donor represented by Formula 6, the mole ratio of the external electron donor to the mixture ranging from 115 to 130.

## Description

### [Technical Field]

The present invention relates to a Ziegler-Natta catalyst for olefin polymerization, a method for preparing a polyolefin with good processability using the same, and a polyolefin resin.

### [Background Art]

Polyolefins are a class of polymer derived from simple olefins. A polyolefin preparation method known in the art is carried out using a Ziegler-Natta catalyst for polymerization. The Ziegler-Natta catalyst provides a polymer with a highly isotactic stereo-chemical arrangement through polymerization of a vinyl monomer using a transition metal halide.

In particular, as polyethylene, a kind of polyolefin, has been used for various applications in recent years, there is a need for preparation of a polyethylene resin with good processability in order to improve resin productivity.

### [Prior Literature]

### [Patent Document]

Korean Patent Registration Publication No. 10-2423660

### [Disclosure]

### [Technical Problem]

It is an aspect of the present invention to provide a catalyst for preparing a polyolefin with good processability and a method for preparing a polyolefin with good processability by satisfying the density, melt index, and melt flow ratio described herein.

### [Technical Solution]

In accordance with one aspect of the present invention, there is provided a Ziegler-Natta catalyst for olefin polymerization.

According to one embodiment of the invention, the Ziegler-Natta catalyst for olefin polymerization includes: (i) a Ziegler-Natta pro-catalyst for olefin polymerization including a titanium compound represented by Formula 1, a magnesium compound represented by Formula 2, and an internal electron donor; (ii) an organoaluminum compound represented by Formula 7; and (iii) an external electron donor represented by Formula 3, wherein the internal electron donor includes a mixture of a first internal electron donor represented by Formula 4, a second internal electron donor represented by Formula 5, and a third internal electron donor represented by Formula 6; and wherein a mole ratio of the external electron donor to the mixture ranging from about 115 to about 130. In some embodiments, the mole ratio of the external electron donor to the mixture may range from about 117 to about 128, for example, about 117 to about 120, about 120 to about 125, or about 125 to about 128.

[Formula 1] TiXₙ(OR¹)₄₋ₙ

(In Formula 1,
R¹ is one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
X is a halogen atom;
n is an integer of 0 to 4; and
a substituent in "substituted or unsubstituted" is independently at least one selected from the group consisting of a halogen group, a cyano group, a nitro group, and a C₁ to C₈ alkyl group.)

   [Formula 2] Mg(OR²)ₖX₂₋ₖ

(In Formula 2,
R² is one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
X is a halogen atom;
k is an integer of 0 to 2; and
a substituent in "substituted or unsubstituted" is independently at least one selected from the group consisting of a halogen group, a cyano group, a nitro group, and a C1 to C8 alkyl group.)

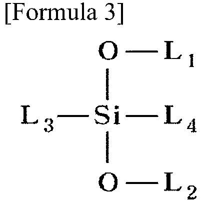

(In Formula 3,
L₁ and L₂ are each independently a substituted or unsubstituted C₁ to C₂₀ alkyl group, where a substituent in "substituted or unsubstituted" is independently at least one selected from the group consisting of a halogen group, a cyano group, a nitro group, and a C₁ to C₈ alkyl group; and
L₃ and L₄ are each independently one selected from the group consisting of a substituted or unsubstituted C₁ to C₂₀ alkyl group and a substituted or unsubstituted C₃ to C₂₀ cycloalkyl group,
a substituent in "substituted or unsubstituted" is independently at least one selected from the group consisting of a halogen group, a cyano group, a nitro group, and a C₁ to C₈ alkyl group.)

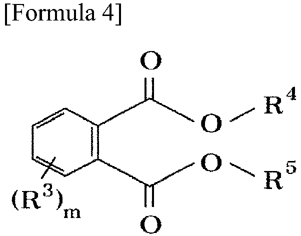

(In Formula 4,
R³ is one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group, where a substituent in "substituted or unsubstituted" is independently at least one selected from the group consisting of a halogen group, a cyano group, a nitro group, and a C₁ to C₈ alkyl group;
R⁴ and R⁵ are each independently a branched C₁ to C₂₀ alkyl group; and
m is an integer of 0 to 4.)

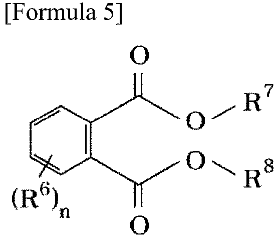

(In Formula 5,
R⁶ is independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group, where a substituent in "substituted or unsubstituted" is independently at least one selected from the group consisting of a halogen group, a cyano group, a nitro group, and a C₁ to C₈ alkyl group;
R⁷ is a straight C₁ to C₂₀ alkyl group;
R⁸ is a branched C₁ to C₂₀ alkyl group; and
n is an integer of 0 to 4.)

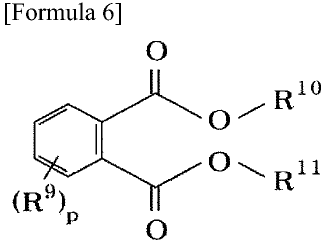

(In Formula 6,
R⁹ is each independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group, where a substituent in "substituted or unsubstituted" is independently at least one selected from the group consisting of a halogen group, a cyano group, a nitro group, and a C₁ to C₈ alkyl group;
R¹⁰ and R¹¹ are each independently a straight C₁ to C₂₀ alkyl group; and
p is an integer of 0 to 4.)

   [Formula 7] Al(R¹³)ₚX₃₋ₚ

(In Formula 7,
R¹³ is one selected from the group consisting of a hydrogen atom, a substituted or unsubstituted C₁ to C₂₀ alkyl group, a substituted or unsubstituted C₃ to C₂₀ cycloalkyl group, and a substituted or unsubstituted C₃ to C₂₀ aryl group;
X is a halogen atom;
p is an integer of 0 to 3; and
a substituent in "substituted or unsubstituted" is independently at least one selected from the group consisting of a halogen group, a cyano group, a nitro group, and a C₁ to C₈ alkyl group.)

In accordance with another aspect of the present invention, there is provided a polyolefin preparation method.

According to one embodiment, the polyolefin preparation method includes polymerizing an olefin monomer in the presence of the Ziegler-Natta catalyst for olefin polymerization.

In accordance with a further aspect of the present invention, there is provided a polyolefin resin.

According to one embodiment, the polyolefin resin is prepared by the polyolefin preparation method and has a melt flow ratio (MFR_{21.6}/MFR_{2.16}) of about 20 to about 25. In some embodiments, the polyolefin resin may have a melt flow ratio (MFR_{21.6}/MFR_{2.16}) of about 20.2 to about 24.9, for example, about 20.2 to about 21.5, about 21.5 to about 22.5, about 22.5 to about 23.5, or about 23.5 to about 24.8.

### [Advantageous Effects]

By satisfying the density, melt index, and melt flow ratio described herein, the Ziegler-Natta catalyst for olefin polymerization produces a polyolefin with good processability.

### [Best Mode]

These and other objects, features, and advantages will become apparent from the following embodiments described with reference to the accompanying drawings. However, the present invention is not limited to the embodiments described herein and may be embodied in other forms. Rather, the following embodiments are given by way of illustration to provide a thorough and complete understanding of the present invention such that technical ideas can be fully conveyed to those skilled in the art.

The same reference numerals designate the same elements in description of drawings. In the drawings, dimensions of various elements, layers, and the like may be exaggerated for clarity of illustration. It will be understood that, although the terms first, second, and the like may be used herein to describe various elements, components, regions, layers, and/or sections, these elements, components, regions, layers, and/or sections should not be limited by these terms. These terms are used to distinguish one element, component, region, layer, or section from another element, component, region, layer, or section. For example, a first element, component, region, layer, or section discussed below could be termed a second element, component, region, layer, or section without departing from the teachings of example embodiments.

Herein, the singular forms "a", "an" and "the" are intended to include the plural forms as well, unless context clearly indicates otherwise.

Herein, it should be understood that the terms "comprise", "include", "have", and the like are intended to specify the presence of stated features, numbers, steps, operations, components, parts, or combinations thereof, and are not intended to preclude the presence or addition of one or more other features, numbers, steps, operations, components, parts, or combinations thereof.

Herein, unless stated otherwise, all numbers, values and/or expressions used herein to express amounts of components, reaction conditions, polymer compositions and formulations should be understood to be qualified in all cases by the term "about", since such numbers are inherently approximate values reflecting, among other things, various uncertainties in measurement encountered in obtaining such values. Further, when a numerical range is disclosed herein, such a range is continuous and includes all values from the minimum value of the range up to and including the maximum value of the range, unless indicated otherwise. Furthermore, where such a range refers to integers, the range includes all integers from the minimum value of the range up to and including the maximum value of the range, unless indicated otherwise.

Herein, when a specific range is described for a variable, the variable will be understood to include all values within the stated range including the described endpoints of the stated range. For example, the range of "5 to 10" will be understood to include not only values, such as 5, 6, 7, 8, 9, and 10, but also any subrange thereof, such as 6 to 10, 7 to 10, 6 to 9, 7 to 9, and any value between integers that fall within the stated range, such as 5.5, 6.5, 7.5, 5.5 to 8.5, and 6.5 to 9. In addition, for example, the range of "10% to 30%" will be understood to include not only values, such as 10%, 11%, 12%, 13%, and all integers up to and including 30%, but also arbitrary subranges thereof, such as 10% to 15%, 12% to 18%, 20% to 30%, and arbitrary values between any of integers within the stated range, such as 10.5%, 15.5%, 25.5%, and the like.

In recent years, as polyethylene has been used for various applications, there is a need for a catalyst for preparation of a polyethylene resin with good processability and a method for preparing the same in order to improve resin productivity.

In order to solve this problem, the present inventors have developed a Ziegler-Natta catalyst for olefin polymerization and a polyolefin preparation method, which can produce a polyethylene with good processability by mixing at least three types of specific internal electron donors in a pro-catalyst with a specific external electron donor, followed by adjusting the mole ratio between the external electron donor and the internal electron donors. Herein, "good processability" may mean that a resin has an appropriate melt flow ratio to facilitate manufacture of a product.

As used herein, "polyethylene with good processability" may be a polyolefin that satisfies the following properties:
(i) Density: 0.950 g/cm³ to 0.965 g/cm³;
(ii) Melt index: 0.1 g/10min to 2.0 g/10min; and
(iii) Melt flow ratio: 20 to 25.

The density is measured in accordance with ASTM D1505.

The melt index refers to a value under a load of 2.16 kg and is measured at 190°C under a load of 2.16 kg in accordance with ASTM D1238.

The melt flow ratio (MFR) is calculated by measuring a melt index (MI_{2.16}) under a load of 2.16 kg at 190°C in accordance with ASTM D1238 and a melt index (MI_{21.6}) under a load of 21.6 kg at 190°C in accordance with ASTM D1238, followed by calculating a ratio (MI_{21.6}/MI_{2.16}) therebetween.

A melt flow ratio of greater than 25 indicates that, despite good processability, a polyolefin resin prepared by polymerization has poor mechanical properties, such as tensile strength (breaking point), resulting in poor final properties of the polymerized resin. A melt flow ratio of less than 20 indicates poor processability of the polyolefin resin prepared by polymerization. Preferably, the melt flow ratio ranges from about 21 to about 25. In some embodiments, the melt flow ratio may range from about 20.2 to about 24.9, for example, about 20.2 to about 21.5, about 21.5 to about 22.5, about 22.5 to about 23.5, or about 23.5 to about 24.8

Herein, unless stated otherwise, "C₁ to Cₙ alkyl group" means a primary alkyl group, a secondary alkyl group (n≥3), and a tertiary alkyl group (n≥4) having 1 to n carbon atoms. For example, the C₁ to Cₙ alkyl group may be a functional group, for example, methyl, ethyl, *n*-propyl, *i*-propyl, *n*-butyl, *i*-butyl, *tert*-butyl, *n*-hexyl, and the like.

Unless stated otherwise, "straight" in reference to an alkyl group means that carbon atom chains constituting the alkyl group consist of straight chains with no branches.

Unless stated otherwise, "branched" in reference to an alkyl group means that at least a portion of carbon atom chains constituting the alkyl group has a branched chain.

Unless stated otherwise, an aryl group refers to a chemical group obtained through removal of one hydrogen atom from a monocyclic or polycyclic C₂ to C₃₀ compound, which contains at least one benzene ring, and derivatives thereof, in which the monocyclic or polycyclic compound containing the benzene ring may include, for example, toluene, xylene, and the like, where a benzene ring or an alkyl side chain is bonded to the benzene ring; biphenyl and the like, where two or more benzene rings are bonded to each other through a single bond; fluorene, xanthene, anthraquinone, and the like, where a benzene ring is condensed with a cycloalkyl group or a heterocycloalkyl group; naphthalene, anthracene, and the like, where two or more benzene rings are condensed, and the like.

Herein, unless stated otherwise, the prefix "hetero" means that a carbon atom is substituted with one to three heteroatoms selected from the group consisting of -N-, -O-, -S-, and -P-. For example, the heteroatom may include a pyridine, pyrrole or carbazole containing a nitrogen atom, a furan or dibenzofuran containing an oxygen atom, dibenzothiophene, diphenylamine, and the like.

Herein, unless stated otherwise, a halogen group refers to a group XVII element, for example, a fluoro group, a chloro group, a bromo group, an iodo group, and the like.

A Ziegler-Natta catalyst for olefin polymerization according to one embodiment includes: (i) a pro-catalyst including a titanium compound described below, a magnesium compound described below, and an internal electron donor; (ii) an organoaluminum described below; and (iii) an external electron donor described below, wherein the internal donor is provided as a mixture of three internal electron donors described below, and the external electron donor and the mixture are present in a particular mole ratio.

Specifically, the Ziegler-Natta catalyst for olefin polymerization includes an external electron donor represented by Formula 3 and a mixture of a first internal electron donor represented by Formula 4, a second internal electron donor represented by Formula 5, and a third internal electron donor represented by Formula 6, wherein the mole ratio of the external electron donor to the mixture ranges from about 115 to about 130. In some embodiments, the mole ratio of the external electron donor to the mixture may range from about 117 to about 128, for example, about 117 to about 120, about 120 to about 125, or about 125 to about 128. Herein, the "mole ratio" means (mole number of the external electron donor)/(mole number of the mixture).

### [External electron donor]

The external electron donor serves to stabilize catalytic active sites of the titanium compound in the pro-catalyst. A siloxane-based external electron donor represented by Formula 3 can facilitate preparation of a polyolefin with good processability when applied to the internal electron donor described below.

The external electron donor may be represented by Formula 3.

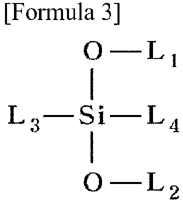

(In Formula 3,
L₁ and L₂ are each independently a substituted or unsubstituted C₁ to C₂₀ alkyl group, where a substituent in "substituted or unsubstituted" is independently at least one selected from the group consisting of a halogen group, a cyano group, a nitro group, and a C₁ to C₈ alkyl group; and
L₃ and L₄ are each independently one selected from the group consisting of a substituted or unsubstituted C₁ to C₂₀ alkyl group and a substituted or unsubstituted C₃ to C₂₀ cycloalkyl group, where a substituent in "substituted or unsubstituted" is independently at least one selected from the group consisting of a halogen group, a cyano group, a nitro group, and a C₁ to C₈ alkyl group.)

In one embodiment, at least one of L₃ and L₄ may be a substituted or unsubstituted C₃ to C₂₀ cycloalkyl group. In this case, the Ziegler-Natta catalyst can facilitate preparation of a polyolefin with good processability when applied to the mixture of the internal electron donors described below.

For example, the external electron donor may be a first external electron donor, in which any one of L₃ and L₄ in Formula 3 is a substituted or unsubstituted C₃ to C₂₀ cycloalkyl group, for example, a substituted or unsubstituted C₃ to C₁₀ cycloalkyl group or a substituted or unsubstituted C₅ to C₆ cycloalkyl group.

For example, the external electron donor may be a second external electron donor, in which both L₃ and L₄ in Formula 3 are a substituted or unsubstituted C₃ to C₂₀ cycloalkyl group, for example, a substituted or unsubstituted C₃ to C₁₀ cycloalkyl group or a substituted or unsubstituted C₅ to C₆ cycloalkyl group.

The external electron donor may include at least one of the first external electron donor and the second external electron donor.

Preferably, the external electron donor is the second external electron donor. Since the second external electron donor can more strongly bind to crystal planes (110) of the magnesium compound than the first external electron donor, the second external electron donor can reduce the number of final active sites, thereby reducing the melt index ratio, whereby the melt flow ratio can easily reach a value of about 20 to about 25. In some embodiments, the melt flow ratio may range from about 20.2 to about 24.9, for example, about 20.2 to about 21.5, about 21.5 to about 22.5, about 22.5 to about 23.5, or about 23.5 to about 24.8.

According to one embodiment, the catalyst may include one external electron donor represented by Formula 3, that is, the first external electron donor alone or the second external electron donor alone.

According to one embodiment, the catalyst may be a mixture of two external electron donors represented by Formula 3. In one embodiment, the catalyst may be a mixture of the first external electron donor and the second external electron donor. For example, in 10 moles of the mixture, the first external electron donor and the second external electron donor may be present in a mole ratio of 3:7 to 7:3, 4:6 to 6:4, or 5:5.

In one embodiment, L₁ and L₂ may be each independently a substituted or unsubstituted C₁ to C₁₀ alkyl group, for example, a substituted or unsubstituted C₁ to C₅ alkyl group.

In one embodiment, the first external electron donor may be represented by Formula 3-1 and the second external electron donor may be represented by Formula 3-2.

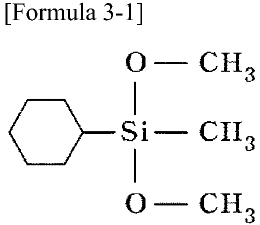

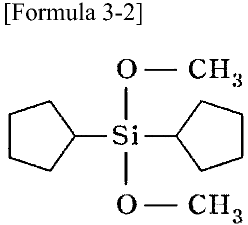

According to one embodiment, the external electron donor may be present in an amount of about 30 wt% to about 50 wt%, based on 100 wt% of the total Ziegler-Natta catalyst for olefin polymerization. Within this range, the catalytic active site can have high stability and there is no problem of deterioration in activity due to poisoning of the catalytic active site.

According to one embodiment, the external electron donor represented by Formula 3 may be present in an amount of about 95 wt% or more, preferably about 99 wt% to about 100 wt%, more preferably about 100 wt%, based on 100 wt% of the total external electron donors in the Ziegler-Natta catalyst for olefin polymerization. Within this range, the effects of the present invention can be easily realized. As used herein, "total external electron donor" may refer to a compound which is included independently of the pro-catalyst in the Ziegler-Natta catalyst for olefin preparation and is known to those skilled in the art to play a role in stabilizing the catalytic active sites of the titanium compound.

### [Internal electron donor]

When the external electron donor is included in the Ziegler-Natta catalyst for olefin polymerization, the internal electron donor is selected to prepare a polyolefin with good processability, that is, a polyolefin satisfying a specific range of density, melt index, and melt index ratio. The internal electron donor provides various active sites when applied to the external electron donor, thereby enabling the preparation of a polyolefin resin with good processability.

According to the present invention, the mixture of the first internal electron donor represented by Formula 4; the second internal electron donor represented by Formula 5; and the third internal electron donor represented by Formula 6 is applied to the external electron donor such that the mole ratio of the external electron donor to the mixture ranges from about 115 to about 130. In some embodiments, the mole ratio of the external electron donor to the mixture may range from about 117 to about 128, for example, about 117 to about 120, about 120 to about 125, or about 125 to about 128.

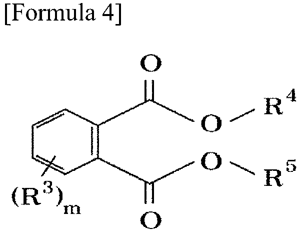

(In Formula 4,
R³ is one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group, where a substituent in "substituted or unsubstituted" is independently at least one selected from the group consisting of a halogen group, a cyano group, a nitro group, and a C₁ to C₈ alkyl group;
R⁴ and R⁵ are independently a branched C₁ to C₂₀ alkyl group; and
m is an integer of 0 to 4.)

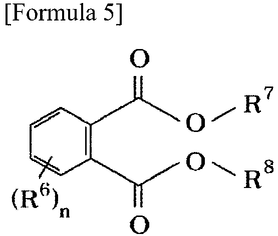

(In Formula 5,
R⁶ is independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group, where a substituent in "substituted or unsubstituted" is independently at least one selected from the group consisting of a halogen group, a cyano group, a nitro group, and a C₁ to C₈ alkyl group;
R⁷ is a straight C₁ to C₂₀ alkyl group;
R⁸ is a branched C₁ to C₂₀ alkyl group; and
n is an integer of 0 to 4.)

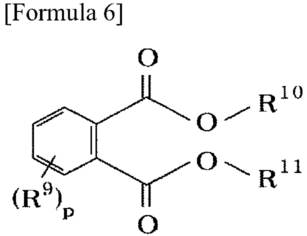

(In Formula 6,
R⁹ is each independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group, where a substituent in "substituted or unsubstituted" is independently at least one selected from the group consisting of a halogen group, a cyano group, a nitro group, and a C₁ to C₈ alkyl group;
R¹⁰ and R¹¹ are each independently a straight C₁ to C₂₀ alkyl group; and
P is an integer of 0 to 4.)

The mixture includes the first internal electron donor, the second internal electron donor, and the third internal electron donor.

For a Ziegler-Natta catalyst for olefin polymerization including the first internal electron donor alone, the second internal electron donor alone, or the third internal electron donor alone with respect to the external electron donor, it can be difficult to produce a polyolefin that satisfies all of the density, melt index, and melt flow ratio described above. In particular, such a Ziegler-Natta catalyst can have poor processability due to difficulty in satisfying the melt flow ratio described above. For a Ziegler-Natta catalyst for olefin polymerization including only two among the first internal electron donor, the second internal electron donor, and the third internal electron donor with respect to the external electron donor, it can be difficult to produce a polyolefin that satisfies all of the density, melt index, and melt flow ratio described above. In particular, such a Ziegler-Natta catalyst for olefin polymerization can have poor processability due to difficulty in satisfying the above melt flow ratio. For a Ziegler-Natta catalyst for olefin polymerization in which the mole ratio of the external electron donor to the internal electron donor is less than 115 or greater than 130, even when including the mixture of the internal electron donors with respect to the external electron donor, it can difficult to produce a polyolefin that satisfies all of the density, melt index, and melt flow ratio described above. In particular, such a Ziegler-Natta catalyst for olefin polymerization can have poor processability due to difficulty in satisfying the aforementioned melt flow ratio.

In one embodiment, the mole ratio of the external electron donor to the mixture may range from 115 to 125.

In one embodiment, the mixture may include at least one type of first internal electron donor.

In one embodiment, the mixture may include at least one type of second internal electron donor.

In one embodiment, the mixture may include at least two types of third internal electron donors.

In one embodiment, the first internal electron donor, the third internal electron donor, and the second internal electron donor in the mixture may be present in a weight ratio relation of: first internal electron donor > third internal electron donor > second internal electron donor. Within this range, the effects of the present invention can be easily realized.

For example, the first internal electron donor may be present in an amount of about 50 wt% to about 80 wt%, preferably about 60 wt% to about 80 wt%, the second internal electron donor may be present in an amount of about 1 wt% to about 20 wt%, preferably about 5 wt% to about 15 wt% of the mixture, and the third internal electron donor may be present in an amount of about 10 wt% to about 40 wt%, preferably about 15 wt% to about 35 wt%, in the mixture. Within this range, the effects of the present invention can be easily realized.

In one embodiment, the mixture of the internal electron donors may be present in an amount of about 10 wt% to about 20 wt%, for example, about 10 wt% to about 15 wt%, in the Ziegler-Natta catalyst for olefin polymerization. Within this range, the effects of the present invention can be easily realized.

In one embodiment, in Formula 4, R⁴ and R⁵ may be independently a branched C₃ to C₁₀ alkyl group or C₃ to C₅ alkyl group. For example, in Formula 4, R⁴ and R⁵ may independently be a C₃ to C₁₀ alkyl group or C₃ to C₅ alkyl group having a branched terminal. The first internal electron donor represented by Formula 4 may include at least one compound represented by any one of Formulas 4-1 to 4-3:

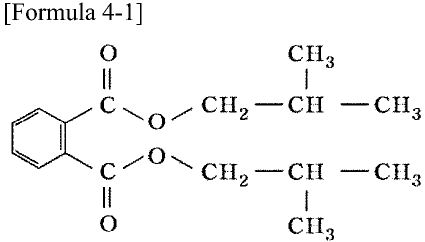

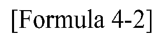

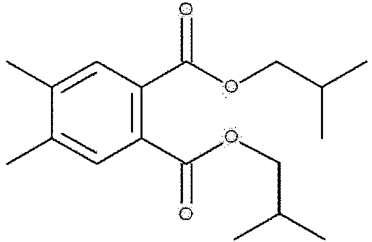

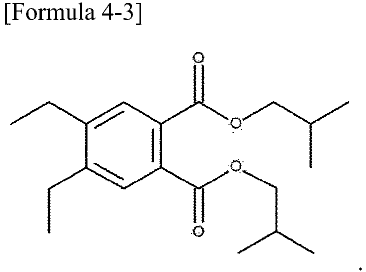

In one embodiment, in Formula 5, R⁷ may be a straight C₁ to C₁₀ alkyl group or a straight C₁ to C₅ alkyl group. In Formula 5, R⁸ may be a branched C₂ to C₁₀ alkyl group or C₂ to C₅ alkyl group. For example, in Formula 5, R⁸ may be a C₂ to C₁₀ alkyl group or C₂ to C₅ alkyl group having a branched terminal. For example, the second internal electron donor represented by Formula 5 may include at least one compound represented by any one of Formulas 5-1 to 5-4:

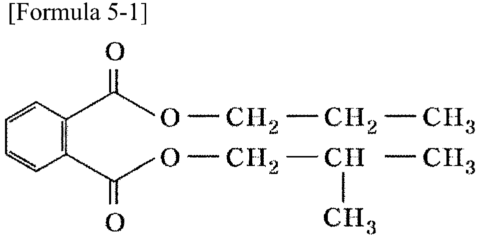

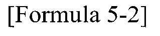

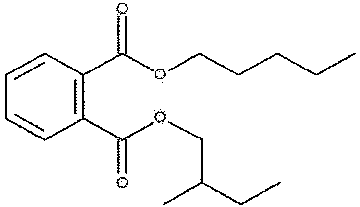

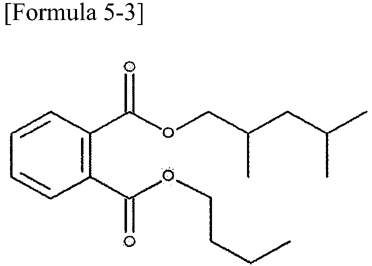

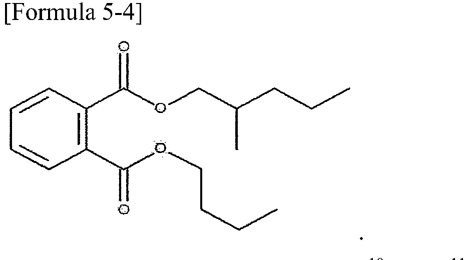

In one embodiment, in Formula 6, R¹⁰ and R¹¹ may be each independently a straight C₁ to C₁₀ alkyl group, or a straight C₁ to C₅ alkyl group. For example, the third internal electron donor represented by Formula 6 may include at least one compound represented by any one of Formulas 6-1 to 6-3:

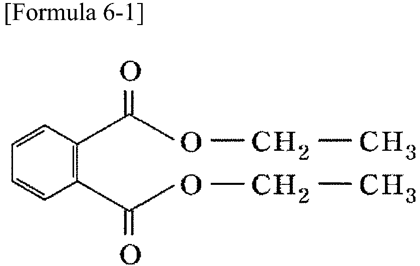

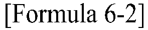

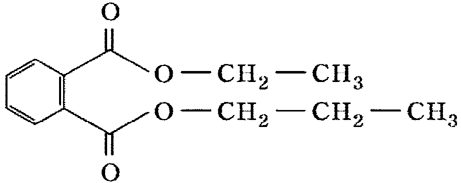

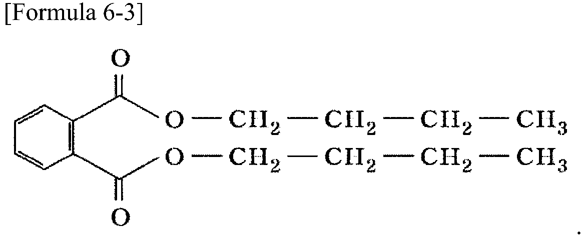

According to one embodiment, the mixture of the first internal electron donor, the second internal electron donor and the third internal electron donor may be present in an amount of about 95 wt% or more, preferably about 99 wt% to about 100 wt%, more preferably about 100 wt%, based on 100 wt% of the total internal electron donors in the Ziegler-Natta catalyst for olefin polymerization. Within this range, the effects of the present invention can be easily realized. Herein, "total internal electron donors" may refer to compounds included in the pro-catalyst of the Ziegler-Natta catalyst for olefin polymerization, which are known to those skilled in the art to play a role in stabilizing the catalytic active sites of the titanium compound.

### [Titanium compound]

The titanium compound may be a compound having an active center metal, that is, a compound containing a metal having an active site. The titanium compound serves to catalyze a substantial polymerization reaction of an olefin monomer to produce polyolefin.

The titanium compound is a compound represented by Formula 1.

[Formula 1] TiXₙ(OR¹)₄₋ₙ

(In Formula 1,
R¹ is one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
X is a halogen atom;
n is an integer of 0 to 4; and
a substituent in "substituted or unsubstituted" is independently at least one selected from the group consisting of a halogen group, a cyano group, a nitro group, and a C₁ to C₈ alkyl group.)

In some embodiments, the titanium compound may include at least one selected from the group consisting of halides of tetravalent titanium and alkoxides of tetravalent titanium. Preferably, the titanium compound is titanium tetrachloride (TiCl₄), titanium trichloride ethoxide (Ti(OC₂H₅)Cl₃), or the like.

### [Magnesium compound]

The magnesium compound acts as a catalyst support and can modulate properties, such as activity and steric regularity, of an active center metal having an active site, such as a titanium compound, depending on the molecular structure and bonding strength through binding to an electron donor.

The magnesium compound is a compound represented by Formula 2.

[Formula 2] Mg(OR²)ₖX₂₋ₖ

(In Formula 2,
R² is one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
X is a halogen atom;
k is an integer of 0 to 2; and
a substituent in "substituted or unsubstituted" is independently at least one selected from the group consisting of a halogen group, a cyano group, a nitro group, and a C₁ to C₈ alkyl group.)

In some embodiments, the magnesium compound may be a magnesium dialkoxide, a magnesium diaryloxide, magnesium chloride (MgCl₂), or the like. Preferably, the magnesium compound is magnesium dialkoxide that is available in high purity to reduce impurities in a final synthesized catalyst, or magnesium diethoxide that is readily soluble in solvents used during catalyst synthesis.

### [Organoaluminum compound]

As a co-catalyst, the organoaluminum compound can activate the active sites of the titanium compound.

The organoaluminum compound is a compound represented by Formula 7.

[Formula 7] Al(R¹³)ₚX₃₋ₚ

(In Formula 7,
R¹³ is one selected from the group consisting of a hydrogen atom, a substituted or unsubstituted C₁ to C₂₀ alkyl group, a substituted or unsubstituted C₃ to C₂₀ cycloalkyl group, and a substituted or unsubstituted C₃ to C₂₀ aryl group;
X is a halogen atom;
p is an integer of 0 to 3; and
a substituent in "substituted or unsubstituted" is independently at least one selected from the group consisting of a halogen group, a cyano group, a nitro group, and a C₁ to C₈ alkyl group.)

In some embodiments, the organoaluminum compound may be at least one selected from the group consisting of trimethylaluminum, triethylaluminum, triisobutylaluminum, trioctylaluminum, diethylaluminum hydride, diisobutylaluminum hydride, diethylaluminum chloride, diisobutylaluminum chloride, sesquiethylaluminum chloride, and ethylaluminum dichloride. Preferably, the organoaluminum compound is triethylaluminum, which can increase polymerization activity and facilitate control of the weight average molecular weight of the polymerized polyolefin.

### [Pro-catalyst]

The pro-catalyst may include the titanium compound represented by Formula 1, the magnesium compound represented by Formula 2, and the internal electron donors, wherein the titanium compound represented by Formula 1 and the internal electron donors may be supported on the magnesium compound represented by Formula 2.

According to one embodiment, the pro-catalyst may be prepared in powder form. According to one embodiment, the Ziegler-Natta catalyst for olefin polymerization may be prepared by mixing the pro-catalyst with the organoaluminum compound and the external electron donor.

The pro-catalyst prepared in powder form enables the organoaluminum compound and the external electron donor to be uniformly coated. The powdered pro-catalyst can be sufficiently dispersed in the organoaluminum compound and the external electron donor to increase dispersion stability, thereby facilitating preparation of a polyolefin having a specific range of density, melt index, and melt index ratio described above.

A method for preparing a Ziegler-Natta pro-catalyst for olefin polymerization may include a primary stirring step in which the titanium compound represented by Formula 1 is mixed with the magnesium compound represented by Formula 2, followed by stirring a resulting mixture; a secondary stirring step in which a mixture of internal electron donors is added to the primarily stirred product, followed by stirring; and a vacuum drying step in which the secondarily stirred product is dried under vacuum.

In the primary stirring step, the titanium compound and the magnesium compound may be added to an organic solvent, followed by stirring the resulting mixture while raising the temperature from room temperature to a first temperature at a temperature ramp rate of about 0.5°C/min to about 1.5°C/min.

The organic solvent may be toluene, ether, acetone, alcohol, or the like, preferably toluene.

The first temperature may range from about 70°C to about 90°C, preferably about 75°C to about 85°C. In some embodiments, the first temperature may range from about 72°C to about 88°C, for example, about 72°C to about 75°C, about 75°C to about 80°C, about 80°C to about 85°C, or about 85°C to about 88°C. If the first temperature is too low, the internal electron donors can be insoluble in the solvent, and if the first temperature is too high, side reactions of the internal electron donors can occur.

In the secondary stirring step, the internal electron donors may be added to the primarily stirred product, followed by stirring for about 1.8 hours to about 2.2 hours while raising the temperature to a second temperature. In some embodiments, stirring may be performed for about 1.82 hours to about 1.9 hours, for example, about 1.9 hours to about 2 hours, or about 2 hours to about 2.2 hours.

The second temperature may range from about 100°C to about 120°C, preferably about 105°C to about 115°C. In some embodiments, the second temperature may range from about 102°C to about 118°C, for example, about 102°C to about 110°C, or about 110°C to about 118°C. If the second temperature is too low, the titanium compound cannot be supported on the magnesium compound, and if the second temperature is too high, the solvent can evaporate.

The preparation method may further include a tertiary stirring step after the secondary stirring step. In some embodiments, after removing the organic solvent and the titanium compound, a fresh organic solvent and a fresh titanium compound may be added to the secondarily stirred product, which in turn may be stirred for about 1.8 hours to about 2.2 hours while raising the temperature from room temperature to a third temperature. In some embodiments, the secondarily stirred product may be stirred for 1.82 hours to about 1.9 hours, about 1.9 hours to about 2 hours, about 2 hours to about 2.2 hours, or about 2 hours to about 2.2 hours. After stirring, the method may further include washing the tertiary stirring product with an organic solvent or the like.

The third temperature may range from about 100°C to about 120°C, preferably about 105°C to about 115°C. In some embodiments, the third temperature may range from about 102°C to about 118°C, for example, about 102°C to about 110°C, or about 110°C to about 118°C.

The vacuum drying step may include drying the secondarily stirred product or the tertiarily stirred product under vacuum to obtain a Ziegler-Natta pro-catalyst for olefin polymerization contained in powder form. The method may further include washing the secondarily stirred product or the tertiarily stirred product with an organic solvent or the like before vacuum drying the secondarily stirred product or the tertiarily stirred product.

### [Ziegler-Natta catalyst for olefin polymerization]

In the Ziegler-Natta pro-catalyst for olefin polymerization, the titanium compound and the external electron donor may be present in a mole ratio of about 1:3 to about 1:9, preferably in a mole ratio of about 1:4 to about 1:8. In some embodiments, the titanium compound and the external electron donor may be in a mole ratio of about 1:3.2 to about 1:8.8, for example, about 1:3.2 to about 1:5, about 1:5 to about 1:7, or about 1:7 to about 1:8.8, in the Ziegler-Natta pro-catalyst for olefin polymerization. Within this range, the catalytic active site can have high stability and there is no problem of deterioration in activity due to poisoning of the catalytic active site.

In the Ziegler-Natta pro-catalyst for olefin polymerization, the organoaluminum compound and the external electron donor may be present in a mole ratio of about 1:0.01 to about 1:0.08, preferably about 1:0.02 to about 1:0.06. In some embodiments, the organoaluminum compound and the external electron donor may be present in a mole ratio of about 1:0.02 to about 1:0.07, for example, about 1:0.02 to about 1:0.04, about 1:0.04 to about 1:0.06, or about 1:0.06 to about 1:0.07, in the Ziegler-Natta pro-catalyst for olefin polymerization. Within this range, the Ziegler-Natta catalyst can facilitate preparation of a polyolefin with good processability.

The magnesium compound and the external electron donor may be present in a mole ratio of about 1:4 to about 1:12, preferably about 1:6 to about 1:9, in the Ziegler-Natta pro-catalyst for olefin polymerization. In some embodiments, the magnesium compound and the external electron donor may be present in a mole ratio of about 1:5 to about 1:11, for example, about 1:5 to about 1:7, about 1:7 to about 1:9, or about 1:9 to about 1:11, in the Ziegler-Natta pro-catalyst for olefin polymerization. Within this range, the Ziegler-Natta catalyst can facilitate preparation of a polyolefin with good processability.

The method for preparing the Ziegler-Natta catalyst for olefin polymerization may include adding the Ziegler-Natta pro-catalyst for olefin polymerization, the organoaluminum compound represented by Formula 7 and the external electron donor represented by Formula 3 to an organic solvent, followed by stirring. In the following description of the method for preparing the Ziegler-Natta catalyst for olefin polymerization, any redundant description regarding the Ziegler-Natta catalyst will be omitted.

The organic solvent may be hexane, toluene, ether, acetone, alcohol or the like, preferably hexane.

Stirring may be performed at a stirring rate of about 280 rpm to about 320 rpm, preferably about 290 rpm to about 310 rpm. In some embodiments, stirring may be performed at a stirring rate of about 285 rpm to about 315 rpm, for example, about 285 rpm to about 295 rpm, about 295 rpm to about 305 rpm, or about 305 rpm to about 315 rpm.

### [Polyolefin preparation method]

A polyolefin preparation method according to one embodiment includes polymerizing an olefin monomer in the presence of the Ziegler-Natta catalyst for olefin polymerization.

According to one embodiment, the olefin monomer may include an olefin monomer represented by Formula 8.

[Formula 8] CH₂=CHR¹⁴

(In Formula 8,
R¹⁴ is hydrogen or a C₁ to C₆ alkyl or aryl group.)

The polyolefin preparation method may be a method for preparing polyethylene. Accordingly, the polyolefin preparation method may include polymerizing an olefin monomer, preferably ethylene, in the presence of the Ziegler-Natta catalyst for olefin polymerization.

In the polyolefin preparation method, polymerization may be performed at a pressure of about 6 bar to about 8 bar and at a temperature of about 80°C to about 90°C in a hydrogen gas atmosphere. If the temperature is too low, polymerization does not occur due to low catalyst activity, and if the temperature is too high, the catalyst activity quickly decreases due to catalyst overreaction.

Polymerization may be performed for about 0.5 hours to about 1.5 hours, preferably about 0.8 hours to about 1.2 hours

According to one embodiment, the Ziegler-Natta catalyst for olefin polymerization may be present in an amount of about 1 x 10⁻⁵ moles to about 3 x 10⁻⁵ moles, preferably about 1.5 x 10⁻⁵ moles to about 2.5 x 10⁻⁵ moles, relative to 1 mole of the olefin monomer. In some embodiments, the Ziegler-Natta catalyst for olefin polymerization may be present in an amount of about 1.2 x 10⁻⁵ moles to about 2.9 x 10⁻⁵ moles, for example, about 1.2 x 10⁻⁵ moles to about 1.5 x 10⁻⁵ moles, about 1.5 x 10⁻⁵ moles to about 2 x 10⁻⁵ moles, about 2 x 10⁻⁵ moles to about 2.5 x 10⁻⁵ moles, or about 2.5 x 10⁻⁵ moles to about 2.9 x 10⁻⁵ moles, relative to 1 mole of the olefin monomer. Within this range, the olefin monomer can produce polyolefin with a high polymerization yield.

### [Polyolefin resin]

According to one embodiment, a polyolefin resin is provided. The polyolefin resin is prepared by the above method and has an MFR (MFI_{21.6}/MFL_{2.16}) of about 20 to about 25. In an embodiment, the MFR (MFR_{21.6}/MFR_{2.16}) may range from about 20.2 to about 24.9, for example, about 20.2 to about 21.5, about 21.5 to about 22.5, about 22.5 to about 23.5, or about 23.5 to about 24.8.

Next, the present invention will be described in more detail with reference to some examples. It should be understood that these examples are provided for illustration only and are no to be construed in any way as limiting the invention.

Components used in each of Examples and Comparative Examples are as follows:
External electron donor: 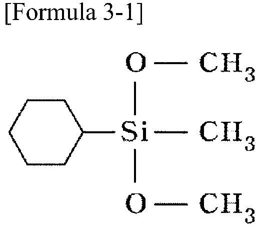 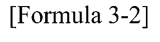 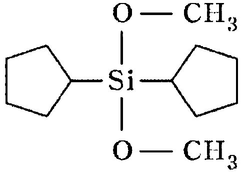
[243] Internal electron donor:

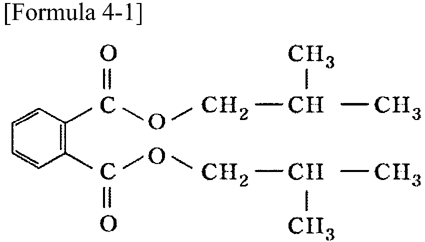

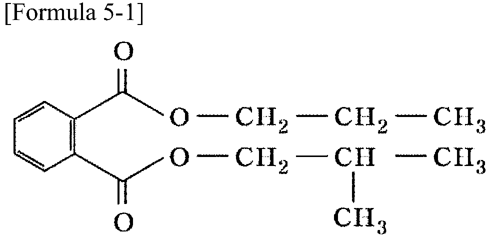

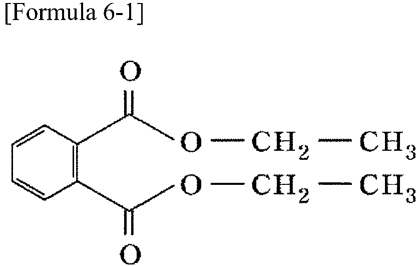

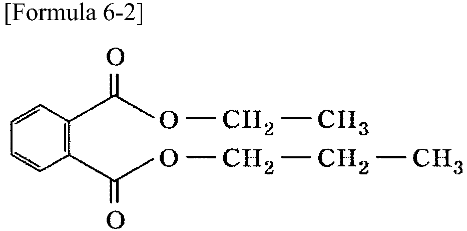

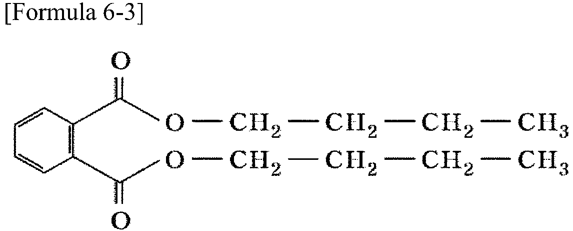

### Example 1

### Preparation of Ziegler-Natta pro-catalyst for olefin polymerization

4 g of a magnesium compound (Mg(OC₂H₅)₂) carrier and 8 ml of a titanium compound (TiCl₄) were added to 12 ml of toluene, followed by primary stirring while raising the temperature from room temperature to 80°C at a rate of 1°C/min. Then, when the reaction temperature reached 80°C, a mixture of internal electron donors was added to the primarily stirred product, followed by secondary stirring for 2 hours while maintaining the temperature after raising the temperature to 110°C at a rate of 1°C/min. Then, after removing the TiCl₄ + toluene solution, fresh TiCl₄ (10 ml) and toluene (30 ml) were added to the secondarily stirred product, followed by tertiary stirring for 2 hours while maintaining the temperature after raising the temperature from room temperature to 110°C at a rate of 1°C/min. Then, the resulting carrier catalyst obtained after tertiary stirring was washed twice with 50 ml toluene at 100°C and twice with 100 ml hexane at 60°C, followed by drying under vacuum, thereby preparing a Ziegler-Natta pro-catalyst (carrier catalyst) for olefin polymerization in powder form.

The mixture of internal electron donors was a mixture of internal electron donors represented by Formula 4-1 (4.5 mmol), Formula 5-1 (0.45 mmol), Formula 6-1 (0.45 mmol), Formula 6-2 (0.45 mmol), and Formula 6-3 (0.45 mmol).

### Preparation of Ziegler-Natta catalyst for olefin polymerization and polyethylene

A 2 L high-pressure reactor was dried in an oven and assembled in a hot state, followed by creating a nitrogen atmosphere inside the reactor through alternation of nitrogen and vacuum conditions three times. Then, with 1,000 ml of hexane, an organic solvent, added to the reactor, 15 mg of the Ziegler-Natta pro-catalyst for olefin polymerization (Preparative Example 1), 0.18 ml of the external electron donor represented by Formula 3-2, and 2 mmol of triethylaluminum (2 ml of 1 M hexane solution), an organoaluminum compound (co-catalyst), were additionally added to the reactor, followed by stirring the resulting solution, thereby preparing a Ziegler-Natta catalyst for olefin polymerization.

Next, after the temperature of the reactor was raised to 85°C, hydrogen was injected once at 3 bar to the reactor, followed by polymerization of polyethylene for 1 hour while continuously adding ethylene at a constant pressure of 7 bar. Then, the temperature of the reactor was lowered to room temperature, followed by collecting and drying the resulting polymer, thereby preparing a polyethylene resin in white powder form.

### Examples 2 to 5

Ziegler-Natta pro-catalysts for olefin polymerization, Ziegler-Natta catalysts for olefin polymerization, and polyethylene resins were prepared in the same manner as in Example 1 except that the internal electron donors and the external electron donors were changed together with the content thereof, as listed in Table 1 and Table 2.

### Comparative Examples 1 to 17

Ziegler-Natta pro-catalysts for olefin polymerization, Ziegler-Natta catalysts for olefin polymerization, and polyethylene resins were prepared in the same manner as in Example 1 except that the internal electron donors and the external electron donors were changed together with the content thereof, as listed in Table 1 and Table 2.

### Property evaluation of polyethylene

1) Activity (G_{PE}/G_{cat}) (unit: none): Activity was calculated by an equation: Weight of polyethylene obtained (g)/Weight of catalyst used (g)
2) MFI_{2.16} (unit: g/10min) and MFI_{21.6} (unit: g/10min): For the polyethylene resins prepared above, MFI_{2.16} under a load of 2.16 kg at 190°C and MFI_{21.6} under a load of 21.6 kg at 190°C were measured using a melt index measurement device in accordance with ASTM D1238.
3) Melt flow ratio: For the polyethylene resins prepared above, the melt indices MFI_{21.6} and MFI_{2.16} were measured in accordance with ASTM D 1238 as in 2), followed by calculating the MFR (MFI_{21.6}/MFI_{2.16}).
4) Density (unit: g/cm³): Density was measured in accordance with ASTM D1505.
5) Tensile strength (breaking point, unit: kgf/cm²): Tensile strength was measured using a tensile testing machine. For the polyethylene resins prepared above, tensile strength was measured in each direction, i.e., in the MD (machine direction) and the TD (transverse direction).

**Table 1**

| Catalyst | Ti (wt%) | Formula 6-1 (wt%) | Formula 6-2 (wt%) | Formula 5-1 (wt%) | Formula 6-3 (wt%) | Formula 4-1 (wt%) | Total internal electron donor (wt%) |
|---|---|---|---|---|---|---|---|
| Preparative Example 1 | 2.4 | 1.0 | 0.8 | 1.2 | 0.9 | 8.2 | 12.1 |
| Preparative Example 2 | 2.4 | 1.0 | - | 1.1 | 1.2 | 8.1 | 11.4 |
| Preparative Example 3 | 2.6 | 1.2 | - | 0.9 | - | 8.9 | 11.0 |
| Preparative Example 4 | 2.7 | - | - | - | - | 9.4 | 9.4 |
| Preparative Example 5 | 2.4 | 1.5 | 0.8 | 1.2 | 0.9 | 8.2 | 12.6 |
| Preparative Example 6 | 2.4 | 1.0 | 0.4 | 1.2 | 0.9 | 8.2 | 11.7 |
| Preparative Example 7 | 2.4 | 1.0 | 1.2 | 1.2 | 0.9 | 8.2 | 12.5 |
| Preparative Example 8 | 2.4 | 1.0 | 0.8 | 0.7 | 0.9 | 8.2 | 11.6 |
| Preparative Example 9 | 2.4 | 1.0 | 0.8 | 1.7 | 0.9 | 8.2 | 12.6 |
| Preparative Example 10 | 2.4 | 1.0 | 0.8 | 1.2 | 0.4 | 8.2 | 12.6 |
| Preparative Example 11 | 2.4 | 1.0 | 0.8 | 1.2 | 1.4 | 8.2 | 11.6 |
| Preparative Example 12 | 2.4 | 1.0 | 0.8 | 1.2 | 0.9 | 7.2 | 13.1 |
| Preparative Example 13 | 2.4 | 1.0 | 0.8 | 1.2 | 0.9 | 9.2 | 11.1 |

| | | | | | | | |
|---|---|---|---|---|---|---|---|
| * In Table 1, "wt%" refers to percent by weight of each component in the Ziegler-Natta catalyst for olefin polymerization. | | | | | | | |

**Table 2**

| Classification | Catalyst | External electron donor | External electron donor/ Internal electron donor (mol/mol) |
|---|---|---|---|
| Example 1 | Preparative Example 1 | Formula 3-2 | 115 |
| Example 2 | Preparative Example 2 | Formula 3-2 | 123 |
| Example 3 | Preparative Example 1 | Formula 3-2 | 130 |
| Example 4 | Preparative Example 2 | Formula 3-2 | 115 |
| Example 5 | Preparative Example 2 | Formula 3-2 | 129 |
| Comparative Example 1 | Preparative Example 1 | Formula 3-1 | 133 |
| Comparative Example 2 | Preparative Example 2 | Formula 3-1 | 144 |
| Comparative Example 3 | Preparative Example 3 | Formula 3-2 | 133 |
| Comparative Example 4 | Preparative Example 3 | Formula 3-1 | 155 |
| Comparative Example 5 | Preparative Example 4 | Formula 3-2 | 175 |
| Comparative Example 6 | Preparative Example 4 | Formula 3-1 | 205 |
| Comparative Example 7 | Preparative Example 5 | Formula 3-2 | 109 |
| Comparative Example 8 | Preparative Example 6 | Formula 3-2 | 113 |
| Comparative Example 9 | Preparative Example 7 | Formula 3-2 | 105 |
| Comparative Example 10 | Preparative Example 8 | Formula 3-2 | 110 |
| Comparative Example 11 | Preparative Example 9 | Formula 3-2 | 101 |
| Comparative Example 12 | Preparative Example 10 | Formula 3-2 | 105 |
| Comparative Example 13 | Preparative Example 11 | Formula 3-2 | 98 |
| Comparative Example 14 | Preparative Example 12 | Formula 3-2 | 105 |
| Comparative Example 15 | Preparative Example 13 | Formula 3-2 | 92 |
| Comparative Example 16 | Preparative Example 1 | Formula 3-2 | 230 |
| Comparative Example 17 | Preparative Example 1 | Formula 3-2 | 58 |

| | | | |
|---|---|---|---|
| * In Table 2, "wt%" refers to percent by weight of each component in the Ziegler-Natta catalyst for olefin polymerization. | | | |

**Table 3**

| Classification | Activity | MFI (I_{2.16}) | MFI (I_{21.6}) | MFR (I_{2.16}/I_{21.6}) | Density | Tensile strength (breaking point, MD/TD) |
|---|---|---|---|---|---|---|
| Example 1 | 4,621 | 1.0 | 21.6 | 21.6 | 0.956 | 390/360 |
| Example 2 | 4,464 | 1.1 | 23.5 | 21.4 | 0.955 | 380/360 |
| Example 3 | 4,651 | 0.9 | 22.0 | 24.4 | 0.954 | 370/350 |
| Example 4 | 4,521 | 1.2 | 24.2 | 20.2 | 0.954 | 390/360 |
| Example 5 | 4,795 | 0.8 | 19.1 | 23.9 | 0.955 | 360/340 |
| Comparative Example 1 | 4,254 | 1.1 | 29.8 | 27.1 | 0.958 | 350/330 |
| Comparative Example 2 | 4,189 | 1.0 | 26.5 | 26.5 | 0.957 | 355/335 |
| Comparative Example 3 | 4,059 | 0.9 | 16.0 | 17.8 | 0.958 | 410/380 |
| Comparative Example 4 | 3,961 | 1.2 | 23.5 | 19.6 | 0.957 | 400/370 |
| Comparative Example 5 | 3,924 | 1.1 | 41.0 | 16.1 | 0.956 | 440/410 |
| Comparative Example 6 | 3,865 | 1.0 | 18.0 | 18.0 | 0.957 | 420/390 |
| Comparative Example 7 | 3.756 | 1.0 | 25.6 | 25.6 | 0.955 | 380/350 |
| Comparative Example 8 | 3,756 | 0.9 | 16.7 | 18.6 | 0.956 | 410/375 |
| Comparative Example 9 | 3,745 | 1.0 | 26.5 | 26.5 | 0.954 | 375/345 |
| Comparative Example 10 | 3,836 | 1.1 | 21.0 | 19.1 | 0.955 | 400/370 |
| Comparative Example 11 | 3,756 | 1.1 | 28.5 | 25.9 | 0.956 | 360/340 |
| Comparative Example 12 | 3,699 | 1.0 | 18.4 | 18.4 | 0.955 | 410/375 |
| Comparative Example 13 | 3,546 | 0.9 | 23.8 | 26.4 | 0.957 | 375/345 |
| Comparative Example 14 | 3,784 | 1.0 | 17.5 | 17.5 | 0.956 | 430/405 |
| Comparative Example 15 | 3,546 | 0.9 | 25.3 | 28.1 | 0.955 | 350/325 |
| Comparative Example 16 | 3,954 | 1.0 | 16.5 | 16.5 | 0.955 | 440/410 |
| Comparative Example 17 | 4,121 | 1.1 | 31.4 | 28.5 | 0.956 | 340/320 |

Referring to Table 3, the Ziegler-Natta catalysts for olefin polymerization prepared in Examples were capable of producing polyolefin that simultaneously satisfy the density, melt index, melt flow ratio according to the present invention.

Conversely, the Ziegler-Natta catalyst for olefin polymerization failing to satisfy the scope of the present invention did not produce polyolefin simultaneously satisfying the density, melt index, and melt flow ratio according to the present invention.

It should be understood that various modifications, changes, alterations, and equivalent embodiments may be made by those skilled in the art without departing from the spirit and scope of the invention.

### [Industrial Availability]

The Ziegler-Natta catalysts for olefin polymerization that satisfy the density, melt index, and melt flow ratio described herein provides a polyolefin with good processability.

## Claims

1. A Ziegler-Natta catalyst for olefin polymerization, comprising:
(i) a Ziegler-Natta pro-catalyst for olefin polymerization comprising a titanium compound represented by Formula 1, a magnesium compound represented by Formula 2, and an internal electron donor;
(ii) an organoaluminum compound represented by Formula 7; and
(iii) an external electron donor represented by Formula 3,
wherein the internal electron donor comprises a mixture of a first internal electron donor represented by Formula 4, a second internal electron donor represented by Formula 5, and a third internal electron donor represented by Formula 6; and
wherein a mole ratio of the external electron donor to the mixture ranges from 115 to 130.
[Formula 1] TiXₙ(OR¹)₄₋ₙ
(In Formula 1,
R¹ is one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
X is a halogen atom;
n is an integer of 0 to 4; and
a substituent in "substituted or unsubstituted" is independently at least one selected from the group consisting of a halogen group, a cyano group, a nitro group, and a C₁ to C₈ alkyl group.)
[Formula 2] Mg(OR²)ₖX₂₋ₖ
(In Formula 2,
R² is one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group;
X is a halogen atom;
k is an integer of 0 to 2; and
a substituent in "substituted or unsubstituted" is independently at least one selected from the group consisting of a halogen group, a cyano group, a nitro group, and a C₁ to C₈ alkyl group.) 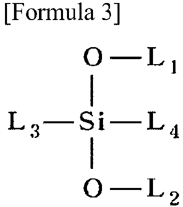
(In Formula 3,
L₁ and L₂ are each independently a substituted or unsubstituted C₁ to C₂₀ alkyl group, where a substituent in "substituted or unsubstituted" is independently at least one selected from the group consisting of a halogen group, a cyano group, a nitro group, and a C₁ to C₈ alkyl group; and
L₃ and L₄ are each independently one selected from the group consisting of a substituted or unsubstituted C₁ to C₂₀ alkyl group and a substituted or unsubstituted C₃ to C₂₀ cycloalkyl group,
where a substituent in "substituted or unsubstituted" is independently at least one selected from the group consisting of a halogen group, a cyano group, a nitro group, and a C₁ to C₈ alkyl group.) 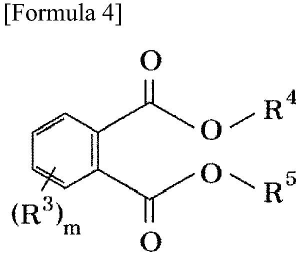
(In Formula 4,
R³ is one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group, where a substituent in "substituted or unsubstituted" is independently at least one selected from the group consisting of a halogen group, a cyano group, a nitro group, and a C₁ to C₈ alkyl group;
R⁴ and R⁵ are each independently a branched C₁ to C₂₀ alkyl group; and
m is an integer of 0 to 4) 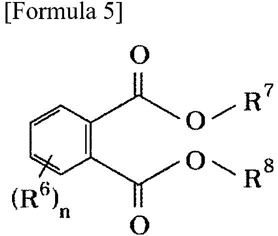
(In Formula 5,
R⁶ is independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group, where a substituent in "substituted or unsubstituted" is independently at least one selected from the group consisting of a halogen group, a cyano group, a nitro group, and a C₁ to C₈ alkyl group;
R⁷ is a straight C₁ to C₂₀ alkyl group;
R⁸ is a branched C₁ to C₂₀ alkyl group; and
n is an integer of 0 to 4.) 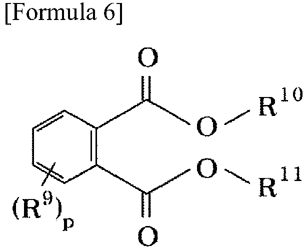
(In Formula 6,
R⁹ is each independently one selected from the group consisting of a substituted or unsubstituted C₁ to C₂₀ alkyl group, a substituted or unsubstituted C₃ to C₂₀ cycloalkyl group, and a substituted or unsubstituted C₃ to C₂₀ aryl group, where a substituent in "substituted or unsubstituted" is independently at least one selected from the group consisting of a halogen group, a cyano group, a nitro group, and a C₁ to C₈ alkyl group;
R¹⁰ and R¹¹ are each independently a straight C₁ to C₂₀ alkyl group; and
p is an integer of 0 to 4.)
[Formula 7] Al(R¹³)ₚX₃₋ₚ
(In Formula 7,
R¹³ is one selected from the group consisting of a hydrogen atom, a substituted or unsubstituted C₁ to C₂₀ alkyl group, a substituted or unsubstituted C₃ to C₂₀ cycloalkyl group, and a substituted or unsubstituted C₃ to C₂₀ aryl group; and
X is a halogen atom;
p is an integer of 0 to 3; and
a substituent in "substituted or unsubstituted" is independently at least one selected from the group consisting of a halogen group, a cyano group, a nitro group, and a C₁ to C₈ alkyl group.)

2. The Ziegler-Natta catalyst for olefin polymerization according to claim 1, wherein the mixture comprises at least one type of first internal electron donor, at least one type of second internal electron donor, and at least two types of third internal electron donors.

3. The Ziegler-Natta catalyst for olefin polymerization according to claim 1, wherein the first internal electron donor, the third internal electron donor and the second internal electron donor of the mixture are present in a weight ratio relation of: first internal electron donor > third internal electron donor > second internal electron donor.

4. The Ziegler-Natta catalyst for olefin polymerization according to claim 1, wherein the first internal electron donor is present in an amount of 50 wt% to 80 wt%, the second internal electron donor is present in an amount of 1 wt% to 20 wt%, and the third internal electron donor is present in an amount of 10 wt% to 40 wt% in the mixture.

5. The Ziegler-Natta catalyst for olefin polymerization according to claim 1, wherein the mixture is present in an amount of 10 wt% to 20 wt% in the Ziegler-Natta catalyst for olefin polymerization.

6. The Ziegler-Natta catalyst for olefin polymerization according to claim 1, wherein the first internal electron donor represented by Formula 4 comprises at least one compound represented by any one of Formulas 4-1 to 4-3:

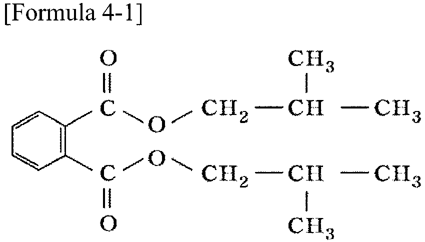

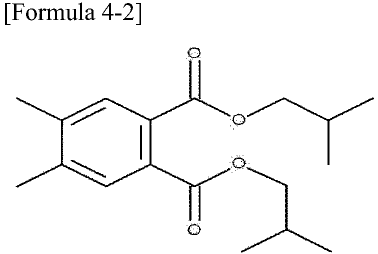

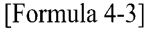

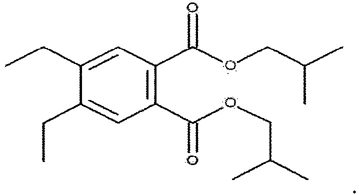

7. The Ziegler-Natta catalyst for olefin polymerization according to claim 1, wherein the second internal electron donor represented by Formula 5 comprises at least one compound represented by any one of Formulas 5-1 to 5-4:

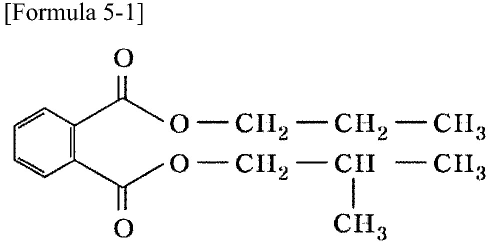

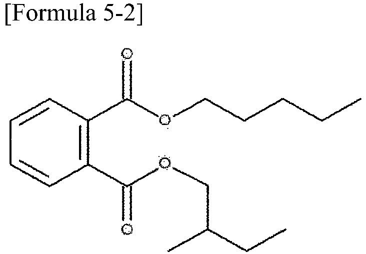

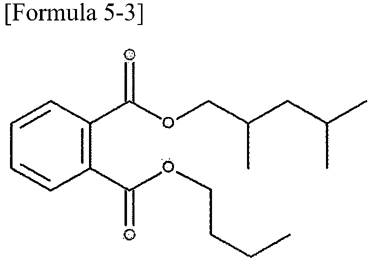

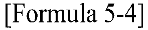

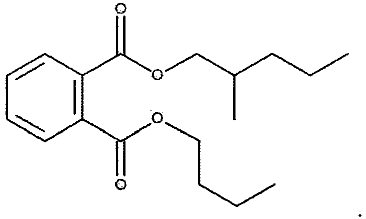

8. The Ziegler-Natta catalyst for olefin polymerization according to claim 1, wherein the third internal electron donor represented by Formula 6 comprises at least one compound represented by any one of Formulas 6-1 to 6-3:

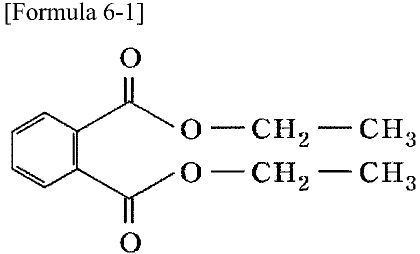

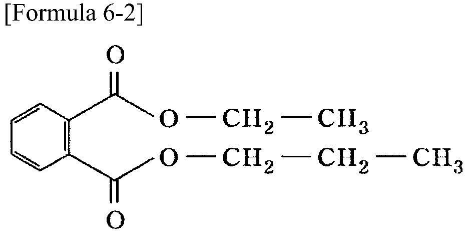

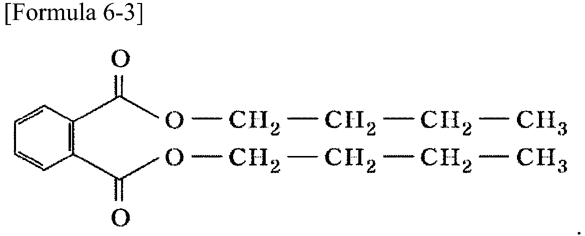

9. The Ziegler-Natta catalyst for olefin polymerization according to claim 1, wherein the titanium compound and the external electron donor are present in a mole ratio of 1:3 to 1:9 in the Ziegler-Natta pro-catalyst for olefin polymerization.

10. The Ziegler-Natta catalyst for olefin polymerization according to claim 1, wherein the external electron donor comprises at least one of a first external electron donor, in which any one of L₃ and L₄ in Formula 3 is a substituted or unsubstituted C₃ to C₂₀ cycloalkyl group, and a second external electron donor, in which both L₃ and L₄ in Formula 3 are a substituted or unsubstituted C₃ to C₂₀ cycloalkyl group.

11. The Ziegler-Natta catalyst for olefin polymerization according to claim 10, wherein the external electron donor is the second external electron donor.

12. The Ziegler-Natta catalyst for olefin polymerization according to claim 10, wherein the first external electron donor is represented by Formula 3-1 and the second external electron donor is represented by Formula 3-2:

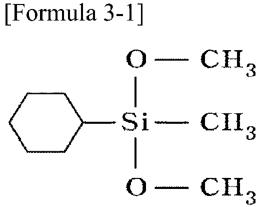

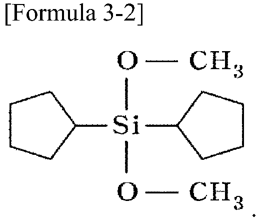

13. A polyolefin preparation method comprising: polymerizing an olefin monomer in the presence of the Ziegler-Natta catalyst for olefin polymerization according to any one of claims 1 to 12.

14. The polyolefin preparation method according to claim 13, wherein the Ziegler-Natta catalyst for olefin polymerization is present in an amount of 1 x 10⁻⁵ moles to 3 x 10⁻⁵ moles relative to 1 mole of the olefin monomer.

15. A polyolefin resin prepared by the polyolefin preparation method according to claim 13 and having an MFR (MFI_{21.6}/MFI_{2.16}) of 20 to 25.
